# EUROPÄISCHE PATENTSCHRIFT

(11) **EP 1 561 754 B1**
(45) Veröffentlichungstag und Bekanntmachung des Hinweises auf die Patenterteilung: **07.03.2007**
(21) Anmeldenummer: 05000774.9
(22) Anmeldetag: 15.01.2005
(51) Int. Cl.: C07F 15/00

(54) **Verfahren zur Herstellung von 1,2-Diaminocyclohexan-Platin(II)-Komplexen**
Process for preparing 1,2-Diaminocyclohexane-Platinum(II) complexes
Complexes de platine de 1,2-diaminocyclohexane et leur procédé de préparation

(30) Priorität: 05.02.2004 DE 102004005906
(43) Veröffentlichungstag der Anmeldung: 10.08.2005
(73) Patentinhaber: W. C. Heraeus GmbH, 63450 Hanau (DE)
(72) Erfinder: Pepels, Andreas, Dr., 63452 Hanau (DE); Schnebeck, Ralf-Dieter, Dr., 65582 Dietz (DE); Rauter, Holger, Dr., 36103 Flieden (DE); Wissmann, Friedrich, Dr., 63755 Alzenau (DE)
(74) Vertreter: Kühn, Hans-Christian

(56) Entgegenhaltungen:
- EP-A- 0 185 225
- US-A- 4 169 846
- US-A- 4 206 208
- US-A- 4 452 812

## Beschreibung

Die Erfindung betrifft ein Verfahren zur Herstellung von 1,2-Diaminocyclohexan-Platin(II)-Komplexen, insbesondere Diaminocyclohexan-Platin(II)-Dicarboxylat-Komplexe wie Oxaliplatin.

*cis*-Platin(II) Komplexe mit 1,2-Diaminocyclohexan-Liganden finden z.B. als Wirkstoffe für die Fertigung von antitumoraktiven Zubereitungen Verwendung (B.Lippert, ed. Cisplatin, Wiley VCH 1999).

Beispiele für Platinkomplexe mit Antitumoraktivität sind Verbindungen der Formeln (1), (2), (3): 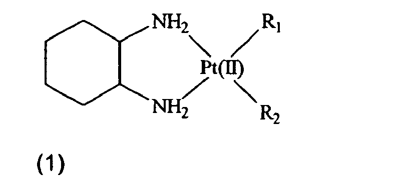 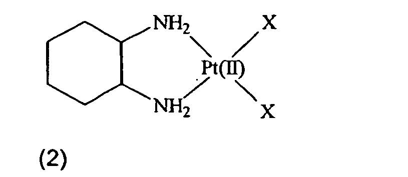 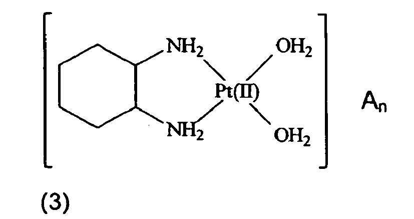 wobei R₁ und R₂ zusammen eine Dicarboxylato-Gruppe bilden, X für CI oder I, A für ein ein- oder zweiwertiges Anion und n für 1 oder 2 stehen.

Das im vorliegenden beschriebene Verfahren zur Herstellung von *cis*-Platin-Verbindungen bezieht sich vorzugsweise auf Oxaliplatin [R₁ und R₂ bilden zusammen einen Rest der Formel (4)] 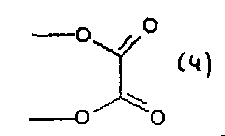 Gemäß US 5 290 961 (Beispiel) wird zu DACH-PECC₂ (II) eine Silberionenlösung zugesetzt, die nicht weniger as zwei Äquivalente Silber bezogen auf die Verbindung (II) enthält, Silberchlorid wird entfernt, der Lösung werden Natriumiodid und/oder Kaliumiodid zugesetzt, um die nicht umgewandelte Verbindung (II), die Nebenprodukte der Verbindung (II) und nicht umgesetzte Silberionen in deren Iodverbindungen zu überführen, dem folgt deren Entfernen, und danach wird dem restlichen Platinkomplex Oxalsäure zugesetzt.

Es stellt sich die Aufgabe, Diaminocyclohexan-Platin(II)-Dicarboxylat-Komplexe in einer Qualität bereitzustellen, die eine oder mehrere der folgenden Anforderungen erfüllen:
1. hohe Reinheit, insbesondere niedriger Ag Gehalt;
2. erfüllt oder übertrifft Anforderungen der EP (European Pharmacopoeia, 4th edition, 2002, supplement 4.4);
3. es ist keine Umkristallisation zur Reinigung des Endprodukts notwendig;
4. erhältlich in hoher Ausbeute;
5. besondere Eignung des Wirkstoffs für parenterale Anwendungen.

Die Aufgabe wird durch ein Verfahren zur Herstellung von Diaminocyclohexan-Platin(II)-Dicarboxylaten mit folgenden Schritten gelöst:
- B: Umsetzung von K₂PtJ₄ mit 1,2-Diaminocyclohexan (DACH) zu 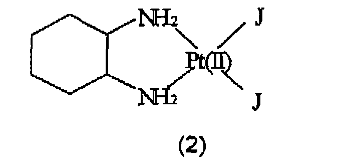
- C: Umsetzung von (2) mit einem Silbersalz AgₙA zu 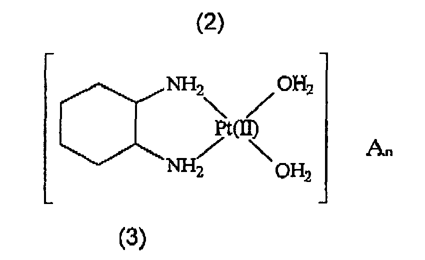 und Entfernen des entstandenen AgJ-Präzipitats.
- D: Umsetzung von (3) mit einem Oxalat zu 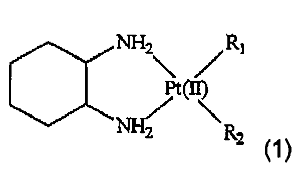 mit R1, R2 = Oxalato;
- F: Isolation des Produkts aus D; sowie gegebenenfalls
- G: Waschen des erhaltenen Produkts mit Wasser und Methanol (oder einem anderen, leicht siedenden Lösemittel, welches pharmakologisch akzeptabel ist),
wobei in Schritt C das Silbersalz im Unterschuss eingesetzt wird. Bei der Synthese wird also die Verbindung nach Formel (2) mit einem stöchiometrischen Unterschuss, d.h. weniger als 2 Moläquivalenten, an Silbersalz umgesetzt, um einen niedrigen Silbergehalt im Produkt sicherzustellen.

Die optische und Isomeren-Reinheit des Verfahrensprodukts hängt zunächst von der Qualität des chiralen Liganden 1,2-Diaminocyclohexan ab. Bevorzugt wird 1,2-Diaminocyclohexan hoher optischer und Isomeren-Reinheit eingesetzt. In der Regel sind Produkte der erforderlichen Reinheit kommerziell erhältlich. Wenn nicht, stehen geläufige Reinigungsverfahren wie Co-Kristallisation oder Destillation zur Verfügung.

Bei der Synthese geht man auf der Platinseite zweckmäßig von K₂PtCl₄ aus (optionaler Schritt A). A: K₂PtCl₄ + 4Kl → K₂PtI₄ + 4 KCl

Es ist selbstverständlich auch möglich, direkt von K₂Ptl₄ (Schritt B auszugehen).
Femer ist es auch möglich, direkt K₂PtCl₄ mit DACH umzusetzen. Das Iodid eröffnet aber wegen der geringen Löslichkeit des Ag-Präzipitats günstigere Aussichten für die Reinheit des Endprodukts.

Folgende Verfahrensmerkmale haben sich als vorteilhaft erwiesen. Sie können einzeln oder in Kombination untereinander bei dem erfindungsgemäßen Verfahren eingesetzt werden:
C Das Reaktionsgemisch aus der Silberreaktion wird vor der Filtration auf weniger als 10 °C gekühlt. Dadurch wird das Präzipitat möglichst vollständig entfernt, und das Produkt enthält wenig Silber.
D Das Dicarboxylat bzw. Oxalat wird in Form seines Ammoniumsalzes - entweder als freie Verbindung oder in situ aus Dicarbon- bzw. Oxalsäure und Ammoniak hergestellt - eingesetzt.
E Vor Schritt F wird zweckmäßig eine einfache oder besonders vorteilhaft eine zweifache Behandlung mit Aktivkohle durchgeführt; dies führt zu einem sehr niedrigen Gehalt an Verunreinigungen, insbesondere mit dem Zwischenprodukt 1,2-Diaminocyclohexan-diiodo-platin(II). Nach Analyse enthält das Endprodukt üblicherweise weniger als 0.02 % 1,2-Diaminocyclohexandiiodo-platin(II).
A-F Für alle Reaktionsschritte wird gereinigtes, endotoxinarmes Wasser ("purified water" nach EP 4 bzw. USP 27) mit einem limitierten Bakteriengehalt eingesetzt. Besonders geeignet ist "highly purified water" nach EP 4 (European Pharmacopoeia, 4th edition, 2002).
F Vor der Kristallisation des Produkts wird die Lösung über einen Sterilfilter filtriert. Dadurch eignet sich das Produkt sehr gut zur Herstellung von Infusionslösungen.
G Die Platinverbindung wird nach dem letzten Waschvorgang mit Wasser zusätzlich noch mit Methanol (oder einem anderem, leicht siedenden Lösemittel, welches pharmakologisch akzeptabel ist) gewaschen. Dies führt zu kurzer Trockenzeit und geringem Wassergehalt (und einem geringem Gehalt an Aquaspezies, Verbindung (3)) im Produkt.

Wenn mehrere oder sämtliche Verfahrensschritte kombiniert werden, muss die nach diesem Verfahren hergestellte Verbindung nicht durch eine Umkristallisation gereinigt werden, um die von der European Pharmacopeia (4th edition) geforderte Spezifikation zu erfüllen.

Die nach dem erfindungsgemäßen Verfahren hergestellte Verbindung hat keinen Schmelzpunkt im Bereich von 198 bis 292 °C (wie in US 5,338,874 angegeben), auch keinen Schmelzpunkt im Bereich von 198,3 bis 199,7 °C (laut US 5,420,319), sondern zeigt einen Zersetzungsbereich von 272 bis 303 °C, im engeren einen Zersetzungsbereich von 286 bis 299 °C. Dennoch ist die Kristallstruktur der erhaltenen Platinverbindung identisch mit der publizierten Struktur (Lit. Ref.: Bruck, M.A.; et al., Inorg. Chim. Acta, 92 (1984)).

Die vorliegende Erfindung beschreibt besonders ein Verfahren zur Herstellung von Oxaliplatin [Oxalato-(trans-1-1,2-cyclohexandiamin)platin(II); CA Reg. No. 61825-94-3] entsprechend Formel (1), mit folgenden Reaktionschritten (Schema 1 und Schema 2): Vorprodukt: Isomeren/enantiomerenreines Diaminoclclohexan, gereinigt durch Kristallisation mit geeigneten Tartratsalzen und/oder Destillation.

### Erste Synthesestufe: Herstellung von 1,2-Diaminocyclohexan-diiodo-platin(II)

Reaktion von Kaliumtetrachloroplatinat (K₂[PtCl₄]) mit Kaliumiodid (KI) und 1,2-Diaminocyclohexan, wobei zunächst Diiodo-Verbindungen nach Formel (2), X= I, erhalten werden.

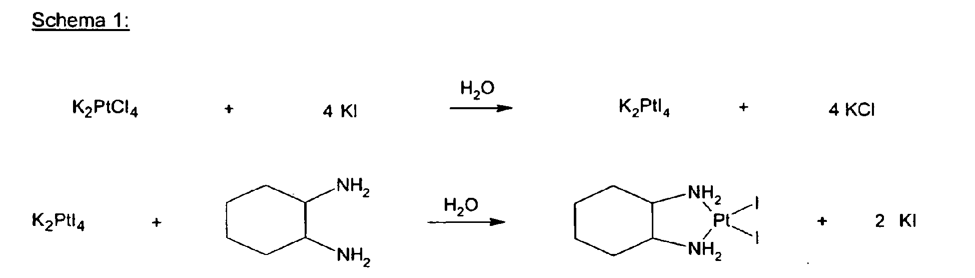

Die erhaltene Zwischenverbindung kann nach Filtrieren und Waschen mit Wasser entweder getrocknet oder direkt in den nächsten Reaktionsschritt (Schema 2) eingeführt werden. 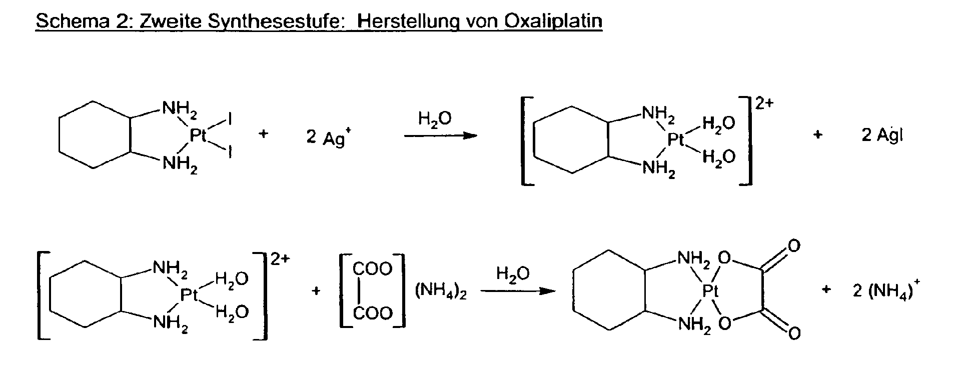
- Die Reaktion mit löslichem Silbersalz (zum Beispiel Silbernitrat, Silbersulfat, oder dergleichen) erfolgt durch Re-Suspendieren des 1,2-Diaminocyclohexan-diiodo-platin(II) (Filterkuchen oder getrocknetes Material) und Zugabe einer, bezogen auf die eingesetzte Platinmenge in Kaliumtetrachloroplatinat, unterstöchiometrischen Menge (weniger als 2 Moläquivalente) an löslichem Silbersalz. Die unterstöchiometrische Menge an löslichem Silbersalz kann dabei im Bereich von 1.4 bis 1.98 Moläquivalenten liegen. Eine bevorzugte Menge an löslichem Silbersalz liegt im Bereich von 1.70 bis 1.90 Moläquivalenten, besonders günstig ist eine Silbersalz-Menge im Bereich von 1.78 bis 1.82 Moläquivalenten. Die Reaktion mit dem Silbersalz wird zweckmäßig bei Temperaturen von 20 bis 70 °C innerhalb von 2 bis 24 Stunden durchgeführt. Anschließend wird zweckmäßig 4 bis 30 Stunden bei Temperaturen von 4 bis 10 °C gekühlt und entstandenes Silberiodid durch Filtration entfernt.
- Die so erhaltene Lösung der Diaquaverbindung nach Formel (3) [Gegenion im dargestellten Fall Nitrat; es kann sich aber auch um Sulfat oder dergleichen handeln] wird mit einer Lösung eines Überschusses Ammoniumoxalat, bezogen auf das eingesetzte Silbersalz versetzt. Die Menge an Ammoniumoxalat liegt zweckmäßig im Bereich von 0.51 bis 0.70 molaren Äquivalenten, bevorzugt sind 0.525 bis 0.60 molare Äquivalente, besonders günstig sind 0.54 bis 0.56 molare Äquivalente. Die Reaktion mit Ammoniumoxalat wird bevorzugt bei Temperaturen von 20 bis 70 °C innerhalb von 2 bis 24 Stunden durchgeführt.
- Die so erhaltene Lösung wird zweckmäßig mit einer Menge von 5 bis 10 Gewichtsprozent Aktivkohle, bezogen auf Kaliumtetrachloroplatinat, versetzt und 12 bis 72 Stunden gerührt. Die Aktivkohle wird jeweils durch Filtration entfernt. Sehr günstig ist eine Wiederholung der beschriebenen Reinigung mit Aktivkohle.
- Die erhaltene Lösung wird nochmals über einen Sterilfilter filtriert, und auf ein geeignetes Volumen von z.B. weniger als 10 ml pro Gramm Produkt eingeengt.
- Der Festanteil wird abgetrennt, z. B. abfiltriert, gewaschen und getrocknet. Dabei ist es vorteihaft, wenn jeweils ein bis dreimal mit Wasser ("purified water" nach EP 4 bzw. USP 27 oder vorzugsweise "highly purified water" nach EP4, endotoxinarm) und ein bis dreimal mit Methanol (oder einem anderem, leicht siedenden Lösemittel, welches pharmakologisch akzeptabel ist) gewaschen und mindestens 24 Stunden in einem sterilen Luftstrom (bei Temperaturen zwischen 20 und 50 °C und Drücken zwischen 1 bar und 10⁻³ bar absolut) getrocknet wird.

Das folgende Beispiel dient der Erläuterung der Erfindung, ohne sie darauf zu beschränken:

### Beispiel 1

K₂[PtCl₄] (59.60g) wird in Wasser (439 ml) gelöst. Kaliumiodid (168.0 g) wird in Wasser gelöst (147 ml). Beide Lösungen werden vereinigt und 30 min gerührt.

*Trans*-1-1,2-Diaminocyclohexan (18.39 g) wird in Wasser (72 ml) gelöst. Die Lösung wird zu der platinhaltigen Lösung unter Rühren zugegeben und das Rühren für 72 Stunden fortgesetzt. Die entstandene Suspension wird filtriert. Der filtrierte Niederschlag wird sechsmal mit Wasser (200 ml) gewaschen und anschließend getrocknet. Ausbeute an 1,2-Diaminocyclohexan-diiodoplatin(II): 77.9 g (96%).
Das erhaltene *Trans*-1-1,2-Diaminocyclohexan-diiodo-platin(II) wird in Wasser (1389 ml) suspendiert und die Suspension auf 45 °C erhitzt. Silbernitrat (43.91 g) wird in Wasser gelöst (139 ml) und diese Lösung mit der platinhaltigen Lösung vereinigt. Das resultierende Gemisch wird für 8 Stunden bei 45 °C gerührt. Die Suspension wird anschließend innerhalb von 6 Stunden auf 6 °C gekühlt und filtriert.
Di-Ammoniumoxalat Monohydrat (20.19 g) wird in Wasser (278 mL) gelöst. Wasser (3333 mL), Ammoniumoxalat-Lösung und platinhaltige Lösung werden vereinigt und 8 Stunden bei 45 °C gerührt. Anschließend wird Aktivkohle zugegeben (3.05 g) und 16 Stunden weitergerührt. Es wird filtriert und die Aktivkohlebehandlung wiederholt. Die erhaltene Lösung wird über einen Sterilfilter in einen Rotationsverdampfer überführt und bei 55 bis 65 °C im Vakuum auf etwa 110 ml eingeengt. Die erhaltene Suspension wird filtriert und der Niederschlag dreimal mit Wasser (28 ml) für 10 min gerührt. Anschließend wird dreimal mit Methanol (139 ml) gewaschen. Der abfiltrierte Niederschlag wird im sterilen Luftstrom mindestens 24 Stunden getrocknet. Ausbeute an Oxalato(*trans*-1-1,2-diaminocyclohexane)platinum (II) 33.88 g (80%).

## Patentansprüche

1. Verfahren zur Herstellung von Diaminocyclohexan-Platin(II)-Oxelaten, mit folgenden Schritten:
B Umsetzung von K₂PtJ₄ mit 1,2-Diaminocyclohexan (DACH) zu 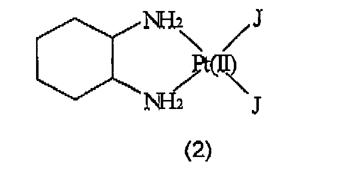
C Umsetzung von (2) mit einem Silbersalz AgₙA zu 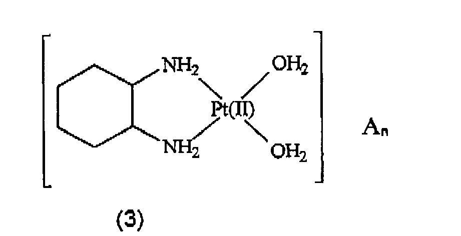 und Entfernen des entstandenen AgJ-Präzipitats,
D Umsetzung von (3) mit einem Oxalat zu 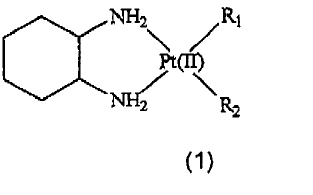
F Isolation des Produkts (1),
wobei R₁ und R₂ zusammen eine Oxalat-Gruppe bilden, A für ein 1-2-wertiges Anion einer Mineralsäure und n für 1 oder 2 stehen, **dadurch gekennzeichnet, dass** in Schritt B die Umsetzung mit K₂PtJ₄ erfolgt, in Schritt C das Silbersalz im Unterschuss eingesetzt wird und in Schritt D die Umsetzung mit einem Oxalat erfolgt.

2. Verfahren nach Anspruch 1 zur Herstellung von Oxaliplatin mit folgendem vorgeschalteten Schritt:
A Umsetzung von K₂PtCl₄ mit KI zu K₂Ptl₄.

3. Verfahren nach einem der vorstehenden Ansprüche, **dadurch gekennzeichnet, dass** bei Schritt C die Mischung vor dem Entfernen des Präzipitats auf 1-10°C gekühlt wird.

4. Verfahren nach einem der vorstehenden Ansprüche, **dadurch gekennzeichnet, dass** bei Schritt D Ammoniumoxalat eingesetzt wird.

5. Verfahren nach einem der vorstehenden Ansprüche, **dadurch gekennzeichnet, dass** die nach Schritt D erhaltene Lösung
E zweimal hintereinander mit Aktivkohle gereinigt und filtriert wird.

6. Verfahren nach einem der vorstehenden Ansprüche, **dadurch gekennzeichnet, dass** die nach Schritt D oder E erhaltene Lösung auf weniger als 10 ml/g Produkt eingeengt wird.

7. Verfahren nach einem der vorstehenden Ansprüche, **dadurch gekennzeichnet, dass** es in gereinigtem, endotoxinarmen Wasser ("purified water" nach EP 4 bzw. USP 27) mit limitiertem Bakteriengehalt durchgeführt wird.

8. Verfahren nach Anspruch 7, bei dem das Wasser "highly purified water" nach EP (European Pharmacopoeia, 4th edition, 2002) ist.

9. Verfahren nach Anspruch 6 **dadurch gekennzeichnet, dass** die nach Schritt E) erhaltene Lösung steril filtriert und dann eingeengt wird, und
F der Feststoffanteil filtriert und getrocknet wird.

10. Verfahren nach einem der vorstehenden Ansprüche, **dadurch gekennzeichnet, dass** nach Schritt F)
G das Produkt mit Wasser nach Anspruch 7 oder 8 und anschließend mit einem, leicht siedenden Lösemittel, welches pharmakologisch akzeptabel ist, gewaschen wird.

11. Verfahren nach Anspruch 10, wobei das Lösemittel Aceton oder Methanol ist.

## Claims

1. Process for the preparation of diaminocyclohexaneplatinum(II) oxalates, comprising the following steps:
B reaction of K₂PtI₄ with 1,2-diaminocyclohexane (DACH) to give 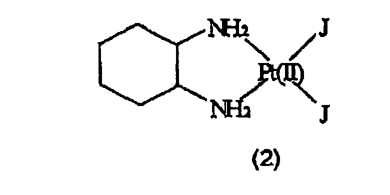
C reaction of (2) with a silver salt AgₙA to give 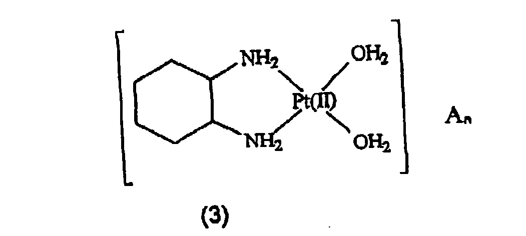 and removal of the resulting AgI precipitate, 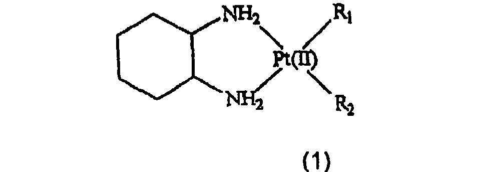
D reaction of (3) with an oxalate to give
F isolation of the product (1), R₁ and R₂ together forming an oxalate group, A representing a 1-2-valent anion of a mineral acid and n representing 1 or 2, **characterized in that** the reaction of K₂PtI₄ is effected in step B, the silver salt is used in less than the stoichiometric amount in step C and the reaction with an oxalate is effected in step D.

2. Process according to Claim 1 for the preparation of oxaliplatinum, comprising the following upstream step:
A reaction of K₂PtCl₄ with KI to give K₂PtI₄.

3. Process according to either of the preceding Claims, **characterized in that**, in step C, the mixture is cooled to 1-10°C before removal of the precipitate.

4. Process according to any of the preceding Claims, **characterized in that** ammonium oxalate is used in step D.

5. Process according to any of the preceding Claims, **characterized in that** the solution obtained after step D
E is purified twice in succession with active carbon and filtered.

6. Process according to any of the preceding Claims, **characterized in that** the solution obtained after step D or E is evaporated to less than 10 ml/g of product.

7. Process according to any of the preceding Claims, **characterized in that** it is carried out in purified, low-endotoxin water ("purified water" according to EP 4 or USP 27) having a limited bacteria content.

8. Process according to Claim 7, in which the water is "highly purified water" according to EP (European Pharmacopoeia, 4th edition, 2002).

9. Process according to Claim 5, **characterized in that** the solution obtained after step E) is sterile-filtered and then evaporated, and
F the solid fraction is filtered and dried.

10. Process according to any of the preceding Claims, **characterized in that** after step F)
G the product is washed with water according to Claim 7 or 8 and then with a low-boiling solvent which is pharmacologically acceptable.

11. Process according to Claim 10, the solvent being acetone or methanol.

## Revendications

1. Procédé pour la préparation d'oxalates de diaminocyclohexane-platine(II) avec les étapes suivantes :
B réaction de K₂PtJ₄ avec du 1,2-diaminocydohexane (DACH) en 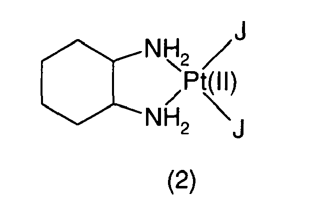
C réaction de (2) avec un sel d'argent AgₙA en 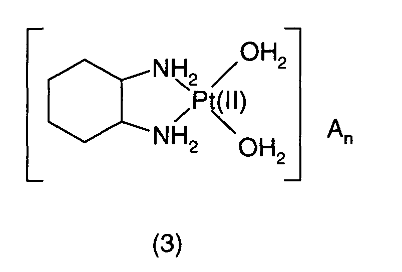 et élimination du précipité d'AgJ produit,
D réaction de (3) avec un oxolate en 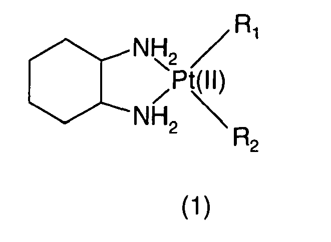
F isolement du produit (1),
où R₁ et R₂ forment ensemble un groupe oxalate, A représente un anion mono-bi-valent d'un acide minéral et n est égal à 1 ou à 2, **caractérisé en ce que** dans l'étape B la réaction est réalisée avec K₂PtJ₄, dans l'étape C le sel d'argent est utilisé par défaut et dans l'étape D la réaction est réalisée avec un oxalate.

2. Procédé selon la revendication 1 pour la préparation d'oxaliplatine avec l'étape suivante placée en amont :
A réaction de K₂PtCl₄ avec Kl en K₂PtI₄.

3. Procédé selon l'une quelconque des revendications précédentes, **caractérisé en ce que** dans l'étape C, on refroidit le mélange avant l'élimination du précipité à 1-10°C.

4. Procédé selon l'une quelconque des revendications précédentes, **caractérisé en ce que** dans l'étape D on utilise de l'oxalate d'ammonium.

5. Procédé selon l'une quelconque des revendications précédentes, **caractérisé en ce que** la solution obtenue selon l'étape D
E est purifiée deux fois successivement avec du charbon actif et filtrée.

6. Procédé selon l'une quelconque des revendications précédentes, **caractérisé en ce que** la solution obtenue selon l'étape D ou E est concentrée à moins de 10 ml/g de produit.

7. Procédé selon l'une quelconque des revendications précédentes, **caractérisé en ce qu'**il est réalisé dans une eau purifiée pauvre en endotoxine ("eau purifiée" selon EP 4 respectivement USP 27) avec une teneur limitée en bactéries.

8. Procédé selon la revendication 7, dans lequel l'eau est de la "highly purified water" selon EP (European Pharmacopoeia, 4th edition, 2002).

9. Procédé selon la revendication 5, **caractérisé en ce que** la solution obtenue selon l'étape E) est filtrée de manière stérile et est ensuite concentrée, et
F la part de matières solides est filtrée et séchée.

10. Procédé selon l'une quelconque des revendications précédentes, **caractérisé en ce qu'**après l'étape F)
G le produit est lavé avec de l'eau selon la revendication 7 ou 8 et ensuite avec un solvant de faible point d'ébullition, lequel est pharmacologiquement acceptable.

11. Procédé selon la revendication 10, dans lequel le solvant est l'acétone ou le méthanol.
